(19) Europäisches Patentamt
European Patent Office
Office européen des brevets

(11) Veröffentlichungsnummer : **0 126 369 B2**

(12) **NEUE EUROPÄISCHE PATENTSCHRIFT**

(45) Veröffentlichungstag der neuen Patentschrift : **18.12.91 Patentblatt 91/51**

(51) Int. Cl.$^5$ : **C08G 75/02**

(21) Anmeldenummer : **84105162.6**

(22) Anmeldetag : **08.05.84**

(54) **Verfahren zur Herstellung von hochmolekularen, gegebenenfalls verzweigten Polyarylensulfiden.**

Die Akte enthält technische Angaben, die nach dem Eingang der Anmeldung eingereicht wurden und die nicht in dieser Patentschrift enthalten sind.

(30) Priorität : **20.05.83 DE 3318401**

(43) Veröffentlichungstag der Anmeldung : **28.11.84 Patentblatt 84/48**

(45) Bekanntmachung des Hinweises auf die Patenterteilung : **10.08.88 Patentblatt 88/32**

(45) Bekanntmachung des Hinweises auf die Entscheidung über den Einspruch : **18.12.91 Patentblatt 91/51**

(84) Benannte Vertragsstaaten : **DE FR GB IT**

(56) Entgegenhaltungen :
**EP-A- 0 065 689**
**EP-A- 0 073 525**
**EP-A- 0 086 487**
**EP-A- 0 100 536**
**DE-A- 1 620 923**
**US-A- 3 354 129**
**US-A- 3 783 138**
**US-A- 3 876 591**

(73) Patentinhaber : **BAYER AG**
**W-5090 Leverkusen 1 Bayerwerk (DE)**

(72) Erfinder : **Ostlinning, Edgar, Dr.**
**Rembrandtstrasse 37**
**W-4000 Düsseldorf (DE)**
Erfinder : **Idel, Karsten, Dr.**
**Scheiblerstrasse 81**
**W-4150 Krefeld (DE)**

**EP 0 126 369 B2**

## Beschreibung

Gegenstand der Erfindung ist ein Verfahren zur Herstellung von hochmolekularen, gegebenenfalls verzweigten Polyarylensulfiden. Diese können in einem polaren organischen Lösungsmittel in Abwesenheit von Wasser aus Alkalisulfiden und Halogenaromaten hergestellt werden

Polyarylensulfide und ihre Herstellung sind bekannt, siehe beispielsweise US-PS-2 513188, 3 117 620, 3 354129, 3 524 835, 3 790 536, 3 839 301, 4 048 259, 4 038 260, 4 038 261, 4 038 262, 4 056 515, 4 060 520, 4 064 114, 4 116 947, 4 282 347, DE-AS-2 453 485, 2 453 749, DE-OS-2 623 362, 2 623 363, 2 623 333, 2 930 797, 2 930 710, 3 019 732, 3 030 488.

Alle diese Verfahren setzen Ausgangsstoffe ein, die vor der Umsetzung zu Polyarylensulfiden in einem extra Reaktionsschritt teilweise entwassert werden.

So werden z.B. im Verfahren der DE-OS 3 030 488 Alkalisulfide eingesetzt, die einen Wassergehalt von 1 bis 2,4 Mol Wasser pro Mol Alkalisulfid haben. Gemäß den US-Patenten 4 056 515 und 4 060 520 verbleiben in den Reaktionsgemischen nach der Vorentwässerung mehrmals 1 Mol Wasser pro Mol S-SPender. In der US-PS-4 282 347 wird nach dem Entwässerungsschritt Wasser zum Reaktionsgemisch gegeben, um einen bestimmten Wassergehalt einzustellen. In der US-A-3 354129 wird die Entwässerung des Alkalisulfids in N-Methylpyrrolidon bevorzugt, wobei allerdings eine vollständige Entwässerung nicht möglich ist. Demgegenüber wurde nun gefunden, daß es besonders vorteilhaft ist, wasserhaltige Komponenten vor der Zugabe der Halogenaromaten durch Destillation, gegebenenfalls unter Zusatz eines inerten $H_2O$-Schleppers, in N-Methylcaprolactam zu entwässern und dann die Halogenverbindungen zuzugeben und die Umsetzung durchzuführen.

Das erfindungsgemäße Verfahren hat weiterhin den Vorteil, daß unter Normaldruck oder geringfügigem Überdruck (0,1 bis 2,5 bar) gearbeitet werden kann.

Gegenstand der Erfindung ist ein Verfahren zur Herstellung von gegebenenfalls verzweigten Polyarylensulfiden aus

a) 0 - 100 Mol-%, vorzugsweise 50 - 100 Mol-% Dihalogenaromaten der Formel

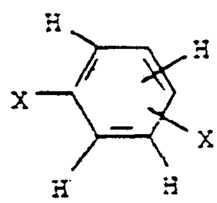

(I)

und 0 - 100 Mol-%, vorzugsweise 0 - 50 Mol-% Dihalogenaromaten der Formel

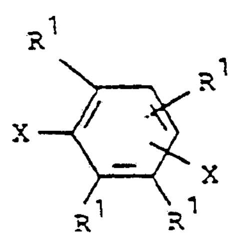

(II)

in denen

X für zueinander meta-oder para-ständiges Halogen wie Chlor oder Brom steht und

$R^1$ gleich öder verschieden ist und Wasserstoff, Alkyl, Cycloalkyl, Aryl, Alkylaryl, Arylalkyl sein kann, wobei zwei zueinander orthoständige Reste $R^1$ zu einem aromatischen oder heterocyclischen Ring verknüpft sein können und immer ein Rest $R^1$ verschieden von Wasserstoff ist und

b) 0 - 5 Mol-%, bevorzugt 0,1 - 2,5 Mol-%, bezogen auf die Summe der Dihalogenaromaten der Formel I und II, eines Tri- oder Tetrahalogenaromaten der Formel

$$ArX_n \quad (III)$$

wobei

Ar ein aromatischer oder heterocyclischer Rest ist,

X für Chlor oder Brom steht und

n 3 oder 4 ist,

c) Alkalisulfiden, bevorzugt Natrium- oder Kaliumsulfid oder deren Mischung, bevorzugt in Form ihrer

Hydrate oder wäßrigen Mischungen, gegebenenfalls zusammen mit Alkalihydroxiden wie Natrium- und Kaliumhydroxid, wobei das molare Verhältnis von (a + b): c im Bereich von 0,85: 1 bis 1,15: 1, vorzugsweise 0,95: 1 bis 1,05: 1 liegt, in

d) einem organischen Lösungsmittel, gegebenenfalls unter Mitverwendung von Katalysatoren und/oder Cosolventien, dadurch gekennzeichnet, daß das molare Verhältnis von Alkalisulfiden c) zu dem organischen Lösungsmittel d) im Bereich von 1 : 2 bis 1 : 15 liegt, und das Alkalisulfid vor Zugabe von Halogenaromaten der Formel I, II oder III in N-Methylcaprolactam wasserfrei gemacht wird und die Umsetzung bei einem Druck von 0,1 - 2,5 bar durchgeführt wird. Die Umsetzung erfolgt vorzugsweise bei einer Temperatur von 160 - 270°C, besonders vorzugsweise bei 170 - 250°C.

Als Katalysatoren können für diesen Zweck übliche Substanzen in üblichen Mengen eingesetzt werden, beispielsweise Alkalifluoride. Alkaliphosphate und Alkalicarboxylate. Es werden Pro Mol Alkalisulfid 0,02 bis 1,0 Mol Katalysator eingesetzt.

Als Cosolventien können beispielsweise N, N-Dialkylcarbonsäureamide von $C_1$-$C_8$-aliphatischen und $C_6$-$C_{12}$-aromat-ischen Carbonsäuren in einer Menge von 0,02 bis 1,0 Mol, bezogen auf 1 Mol Alkalisulfid, eingesetzt werden.

$R^1$ steht in Formel II vorzugsweise für Wasserstoff, $C_1$-$C_{20}$-Alkyl, $C_5$-$C_{20}$-Cycloalkyl, $C_6$-$C_{24}$-Aryl, $C_7$-$C_{24}$-Alkylaryl oder $C_7$-$C_{24}$-Aralkyl. Weiterhin können zwei zueinander ortho-ständige Reste $R^1$ einen ankondensierten aromatischen Ring mit insgesamt 6 C-Atomen oder einen ankondensierten heterocyclischen Ring mit 5 bis 6 Ringatomen, der 1 bis 3 Heteroatome wie N, O und S enthält, bilden.

Ar in Formel III steht vorzugsweise für einen aromatischen Rest mit 6 bis 24 C-Atomen, einen heterocyclischen Rest mit 6 bis 24 Ringatomen, besonders bevorzugt für einen aromatischen Rest mit 6 bis 10 C-Atomen, einen heterocyclischen Rest mit 6 bis 10 Ringatomen, wobei die heterocyclischen Reste bis zu 3 Heteroatome wie N, S, O enthalten können.

Alkalisulfide werden in üblichen Mengen und in üblicher Weise eingesetzt. z.B sind Lithium-, Natrium-, Kalium- und Rubidiumsulfid geeignet. vorzugsweise Natrium- und Kaliumsulfid. Es können Alkalisulfide eingesetzt werden, die aus Hydrogensulfiden mit Alkalihydroxiden wie LiOH, NaOH und KOH regeneriert werden. In jedem Fall können Mischungen sowohl der Sulfide als auch der Hydroxide eingesetzt werden.

Die Entwässerung der Sulfide erfindungsgemäß in N-Methylcaprolactam oder N-Ethylcaprolactam erfolgt. Das zur Umsetzung eingesetzte Lösungsmittel und das (hydrat)wasserhaltige Sulfid werden vorgelegt. Dann wird, gegebenenfalls unter Zusatz eines inerten $H_2O$-Schleppmittels, das Wasser abdestilliert.

ErfindungsgemäB können meta- und para-Dihalogenaromaten der Formel (I) bzw. (II) eingesetzt werden. In diesem Fall kann das Verhältnis meta- zu para-Dihalogenaromaten bis zu 30: 70 betragen.

Zur Herstellung von thermoplastisch verarbeitbaren Polyphenylensulfiden werden besonders bevorzugt p-Dihalogenaromaten eingesetzt.

Sollen verzweigte Polyarylensulfide hergestellt werden, müssen Tri-oder Tetrahalogenaromaten der Formel (III) eingesetzt werden, vorzugsweise mindestens 0,05 Mol-%, bezogen auf eingesetztes Alkalisulfid.

Beispiele für erfindungsgemäß einsetzbare Dihalogenaromaten der Formel (I) sind: p-Dichlorbenzol, p-Dibrombenzol, 1-Chlor-4-brombenzol, 1,3-Dichlorbenzol, 1,3-Dibrombenzol, 1-Chlor-3-brombenzol und 1-Chlor-3-brombenzol. Sie sind allein oder im Gemisch miteinander verwendbar. Besonders bevorzugt sind 1,4-Dichlorbenzol und/oder 1,4-Dibrombenzol.

Beispiele für erfindungsgemäß einsetzbare Dihalogenaromaten der Formel (II) sind: 2,5-Dichlortoluol, 2,5-Dichlorxylol, 1-Ethyl-2,5-dichlorbenzol, 1-Ethyl-2,5-Dibrombenzol, 1-Ethyl-2-brom-5-chlorbenzol, 1,2,4,5-Tetramethyl-3,5-dichlorbenzol, 1-Cyclohexyl-2,5-dichlorbenzol, 1-Phenyl-2,5-dichlorbenzol, 1-Benzyl -2,5-dichlorbenzol, 1-Phenyl-2,5-dibrombenzol, 1-p-Tolyl-2,4-dichlorbenzol, 1-p-Tolyl-2,5-dibrombenzol 1-Hexyl-2,5-dichlorbenzol, 2,4-Dichlortoluol, 2,4-Dichlorxylol, 2,4-Dibromcumol und 1-Cyclohexyl-3,5-dichlorbenzol. Sie sind allein oder im Gemisch miteinander einsetzbar.

Beispiele für erfindungsgemäß einzusetzende Tri-bzw. Tetrahalogenatomaten der Formel (III) sind: 1,2,3-Trichlorbenzol, 1,2,4-Trichlorbenzol, 1,2,4-Tribrombenzol, 1,3,5-Trichlor-2,4,5-trimethylbenzol, 1,2,3-Trichlornaphthalin, 1,2,4-Trichlornaphthalin, 1,2,6-Trichlornaphthalin, 2,3,4-Trichlortoluol, 2,3,6-Trichlortoluol, 1,2,3 4-Tetrachlornaphtalin, 1,2,4,5-Tetrachlorbenzol, 2,2'-4,4'-Tetrachlorbiphenyl, 1,3,5-Trichlor-triazin.

Erfindungsgemäß geeignetesorganisches Lösungsmitel ist N-Methylcaprolactam.

Die Reaktionszeit kann bis zu 24 Stunden betragen, liegt vorzugsweise zwischen 2 und 18 Stunden.

Die Umsetzung wird bei einem Druck von 0,1 bar bis 2,5 bar umgesetzt.

Bei der Druchführung des erfindungsgemäßen Verfahrens können alle Komponenten mit Ausnahme der Halogenaromaten vorgelegt werden. Dann wird unter Zusatz von N-Methylcaprolactam entwässert. Eine schrittweise Entwässerung ist ebenfalls möglich. Nachdem das Wasser aus dem Gemisch abdestilliert ist können die Halogenaromaten zugegeben und zur Reaktion gebracht werden, wobei gegebenenfalls noch Lösungsmittel vor der Umsetzung zugegeben wird.

Die Aufarbeitung des Umsetzungsgemisches und die Isolierung der Polyarylensulfide kann in bekannter Weise erfolgen.

Das Polyarylensulfid kann direkt aus der Umsetzungslösung oder erst z. B. nach Zugabe von Wasser und-/oder verdünnten Säuren, nach üblichen Verfahrensschritten abgetrennt werden, beispielsweise durch Filtration oder durch Zentrifugieren. Nach der Abtrennung des Polyarylensulfids schließt sich im allgemeinen eine Wäsche mit Wasser an. Eine Wäsche oder Extraktion mit anderen Waschflüssigkeiten, die auch zusätzlich oder nachträglich zu dieser Wäsche durchgeführt werden kann, ist auch möglich.

Das Polyarylensulfid kann auch beispielsweise durch Abdestillieren des Lösungsmittels und eine anschließende Wäsche, wie oben beschrieben, gewonnen werden.

Die erfindungsgemäßen Polyarylensulfide können mit anderen Polymeren wie Pigmenten und Füllstoffen, beispielsweise Graphit. Metallpulver, Glaspulver, Quarzmehl oder Glasfasern gemischt oder mit den für Polyarylen sulfide üblichen Additiven, beispielsweise üblichen Stabilisatoren oder Entformungs mitteln, versetzt werden.

Im allgemeinen wird das Schmelzfließverhalten von Polyarylensulfiden nach ASTM 1238-70 bei 316° C unter Verwendung eines 5-kg-Gewichtes gemessen und in g/10 Minuten angegeben.

Bei hohen Schmelzflußwerten kann diese Messung jedoch aufgrund der hohen Ausflußrate der Polymerschmelze Schwierigkeiten bereiten. Es wurde die Schmelzviskosität $\eta m$ der Polymerschmelze (in Pa.s) bei 306° C in Abhängigkeit von der Schubspannung (in Pa.s) mit Hilfe des Instron-Rotationsviskosimeters bestimmt.

Man kann auf diese Weise die Schmelzviskosität in einem sehr weiten Bereich von $10^{-1}$ bis $10^7$ Pa.s bestimmen. In dem Instron-Rheometer (Rheometer Modell 3250 der Fa. Instron; Durchmesser des Kegels und der Platte 2 cm) wird das Polymer zwischen einer festen Platte und einem drehbaren Kegel geschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden.

Angegeben wird die Schmelzviskosität, die bei einer Schubspannung von = $10^2$ Pa gemessen wird.

Die erfindungsgemäßen Polyarylensulfide besitzen direkt nach der Isolierung aus dem Reaktionsgemisch im allgemeinen Schmelzviskositäten von 0,3 x $10^3$ bis 5 x $10^6$ Pa.s, vorzugsweise von 1,5 x $10^3$ bis $10^4$ Pa.s und gute farbliche Eigenschaften. Sie können direkt durch Extrusion, Extrusionsblasen, Spritzgießen oder sonst übliche Verarbeitungstechniken zu Folien, Formkörpern oder Fasern verarbeitet werden. Diese können in üblicher Weise Verwendung finden, z. B. als Automobilteile, Armaturen, Elektroteile wie Schalter, elektronische Tafeln, chemikalienresistente und verwitterungsstabile Teile und Apparate wie Pumpengehäuse und Pumpenflügelräder, Ätzbadschalen, Dichtungsringe, sowie als Teile von Büromaschinen, Fernmeldeeinrichtungen, Haushaltsgeräten, Ventilen und Kugellagern.

**Vergleichsbeispiel 1**

Herstellung von Polyphenylsulfid gemäß US-PS-3 354 129

In einem mit Rührer ausgerüsteten Autoklaven wurden 129 g Natriumsulfidtrihydrat (≙1 Mol $Na_2S$) und 300 g N-Methylpyrroliden zusammengegeben. Das Gemisch wurde mit Stickstoff gespült und langsam bis auf 202° C erwärmt. Dabei destillierten insgesamt 19 ml Wasser ab (das entspricht einem Restwassergehalt von 1,78 Mol bezogen auf Natriumsulfid). Der Ansatz wurde anschließend auf ca. 160°C abgekühlt und 147 g p-Dichlorbenzol (≙1 Mol) in ca. 50 g Methylpyrrolidon hinzugefügt. Man erwärmt das Reaktionsgemisch unter einem Stickstoffvordruck von 2,5 bar in 30 Minuten auf 245°C und hält diese Temperatur 3 Stunden. Dabei wird ein Enddruck von 14,5 bar erreicht. Nach Abkühlen auf Raumtemperatur wird ein grauer Feststoff isoliert, der anschließend mit Wasser gewaschen wird. Man trocknet bei 80° C im Vakuum und erhält 100,3 g (≙93 %) Poly-p-phenylsulfid mit hellbrauner Farbe und folgenden Kenndaten: Schmelzviskosität $\eta m$ = 4,5 Pa. s (bei $\tau$ = $10^2$ Pa ).

Eine thermoplastische Verarbeitung ist ohne Härtung nicht möglich.

**Vergleichsbeispiel 2**

Wie Vergleichsbeispiel 1, jedoch wurden zusätzlich 1,81 g 1,2,4-Trichlorbenzol (≙1 Mol-% bezogen auf Dichlorbenzol) eingesetzt und die Reaktion unter Normaldruck durchgeführt. 48,9 g hellgraues Produkt (≙45,3 % Ausbeute bezogen auf $Na_2S$) mit einer Schmelzviskosität von $\eta m < 1$ Pa.s (bei $\tau = 10^2$ Pa) wurden isoliert.

**Vergleichsbeispiel 3**

Wie Vergleichsbeispiel 1, jedoch wurde N-Methylcaprolactam als Lösungsmittel eingesetzt Man erhält 85,2

g (≙76,7 %) Polyphenylsulfid mit hellgrauer Farbe und einer Schmelzviskosität von $\eta m < 1$ Pa.s (bei $\tau = 10^2$ Pa).

**Beispiel 1**

In einem 2-l Dreihalskolben, der mit Thermometer, Rührer und Wasserabscheider ausgerüstet ist, werden unter Stickstoff 1110g N-Methylcaprolactam, 305,2 g Natriumsulfidtrihydrat ( ≙2,32 Mol), 28,0 g 50-% ige NaOH, 500 g Toluol und 30,2 g N,N-Dimethylacetamid (15 Mol-% bezogen auf $Na_2S$) vorgelegt. Azeotrop werden 139,3 g $H_2O$ abgeschieden und anschließend Toluol destillativ entfernt. Nach dem Abkühlen auf ca. 170° C werden 341,1 g 1,4-Dichlorbenzol und 2,1 g 1,2,4Trichlorbenzol (0,5 Mol-% bezogen auf Dichlorbenzol) zugegeben und das Reaktionsgemisch 9 Stunden zum Rückfluß erhitzt und das Produkt in üblicher Weise isoliert. Man erhält 232,7 g weißes Polyarylensulfid (= 92,9 % Ausbeute bezogen auf $Na_2S$, Schmelzviskosität von $\eta m = 2{,}2 \times 10^3$ Pa.s (bei $\tau = 10^2$ Pa).

**Beispiel 2**

In einer Apparatur wie im Beispiel 1 werden 305.2 g Nattriumsulfidtrihydrat, 28 g 50 %-ig NaOH und 1000 g Toluol vorgelegt. Azeotrop werden 139,2 g $H_2O$ abgeschieden. Anschließend werden 1110 g N-Methylcaprolactam in dem Maße zugesetzt wie Toluol abdestilliert wird Dabei werden zusätzlich weitere 1,2 g Wasser abdestilliert. Nach dem Abkühlen auf 170° C werden 30,2 g N,N-Dimethylacetamid (15 Mol-% bezogen auf $Na_2S$), 341,1 g 1,4-Dichlorbenzol und 2,1 g 1,2,4-Trichlorbenzol zugegeben und das Gemisch 9 Stunden zum Rückfluß erhitzt. Das in üblicher Weise isolierte weiße Produkt wog 230,8 g (≙92,1 % Ausbeute) und hatte eine Schmelzviskosität von m $2{,}0 \times 10^3$ Pa.s (bei $\tau = 10^2$ Pa).

**Beispiel 3**

In einem 2-l-Dreihalskolben, der mit Thermometer, Rührer und Kolonnenkopf ausgerüstet ist, werden 1110 g N-Methylcaprolactam, 305,2 g Natriumsulfidtrihydrat, 28,0 g 50 %-ige NaOH und 30,2 g N,N-Dimethylacetamid (15 Mol-% bezogen auf $Na_2S$) vorgelegt. Das Gemisch wird unter einem Stickstoffstrom und kräftigem Rühren langsam auf 230°C aufgeheizt und 2 Stunden bei der Temperätur gehalten. Dabei destillieren insgesamt 158,9 g eines Gemisches von Wasser und N-Methylcaprolactam über, das 139.1 g $H_2O$ enthält. Nach Zugabe von 341,1 g 1,4-Dichlorbenzol und 2,5 g 1,2,4-Trichlorbenzol, 0,6 Mol-% bezogen auf Dichlorbenzol wird das Reaktionsgemisch 9 Stunden zum Rückfluß erhitzt und das Produkt in üblicher Weise isoliert. Man erhält 229,9 g weißes Polyarylensulfid (≙91,5 % Ausbeute bezogen auf $Na_2S$, Schmelzviskosität von $\eta m = 3{,}4 \times 10^3$ Pa.s (bei $\tau = 10^2$ Pa).

## Patentansprüche

1. Verfahren zur Herstellung von hochmolekularen, gegebenenfalls verzweigten Polyarylensulfiden aus
a) 0 - 100 Mol-% Dihalogenaromaten der Formel

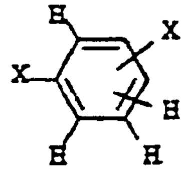

(I)

und 0 - 100 Mol-% Dihalogenaromaten der Formel

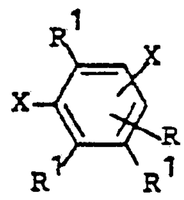

(II),

in denen
X für zueinander meta- oder para-ständiges Halogen, steht und
$R^1$ gleich oder verschieden ist und Wasserstoff, Alkyl, Cycloalkyl, Aryl, Alkylaryl, Arylalkyl sein kann, wobei zwei zueinander orthoständige Reste $R^1$ zu einem aromatischen oder heterocyclischen Ring verknüpft sein können und immer ein Rest $R^1$ Verschieden von Wasserstoff ist und
b) 0 - 5 Mol-% bezogen auf die Summe der Komponenten a) und- b) eines Tri- oder Tetrahalogenaromaten der Formel

ArXn, (III)

wobei
Ar ein aromatischer oder heterocyclischer Rest ist,
X für Chlor oder Brom steht und
n 3 oder 4 ist und
c) Alkalisulfiden, gegebenenfalls zusammen mit Alkalihydroxiden, wobei das molare Verhältnis von (a + b) : c im Bereich von 0,85: 1 bis 1,15: 1 liegt und
d) einem organischen Lösungsmittel, gegebenenfalls unter Mitverwendung von Katalysatoren, und/oder Cosolventien, dadurch gekennzeichnet,

daß das molare Verhältnis von Alkalisulfiden c) und organischem Lösungsmittel d) im Bereich von 1 : 2 bis 1 : 15 liegt und das Alkalisulfid vor der Zugabe von Halogenaromaten der Formeln I, II oder III in N-Methylcaprolactam wasserfrei gemacht wird und die Reaktion bei 0,1 - 2,5 bar durchgeführt wird.

2. Verfahren nach Anspruch 1, dadurch gekennzeichnet, daß bei Temperaturen von 170°C bis 270°C umgesetzt wird.

3. Verfahren nach Anspruch 1, dadurch gekennzeichnet, daß N,N-Dialkylcarbonsäreamide als Cosolventien eingestzt werden.

4. Verfahren nach Anspruch 1, dadurch gekennzeichnet, daß das Alkalisulfid unter zusätzlicher Verwendung eines inerten Schleppmittels wasserfrei gemacht wird.

5. Verfahren nach Anspruch 5, dadurch gekennzeichnet, daß man Toluol als inertes Schleppmittel einsetzt.

6. Verfahren nach wenigstens einem der vorhergehenden Ansprüche, dadurch gekennzeichnet, daß als Alkalisulfid Natriumsulfid verwendet wird.

## Claims

1. Process for the preparation of high molecular weight, optinally branched polyarylene sulphides from
a) 0 - 100 mol % of dihalogenated aromatic compounds corresponding to the formula

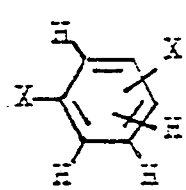

(I)

and 0 - 100 mol% of dihalogenated aromatic compounds of the formula

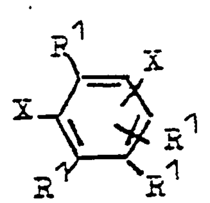

(II)

wherein:
X stands for halogen atoms in the meta or para position to one another and
$R^1$ stands for groups which may be identical or different, namely hydrogen, alkyl, cycloalkyl, aryl, alkylaryl or arylalkyl, or any two groups $R^1$ which are in the ortho position to one another may be joined together to form an aromatic or heterocyclic ring and one of the groups $R^1$ is always different from hydrogen, and
b) 0 - 5 mol %, based on the sum of components a) and b), of a tri- or tetrahalogenated aromatic compound of the formula

$$ArX_n, \quad (III)$$

wherein
Ar denotes an aromatic or heterocyclic group,
X denotes chlorine or bromine and
n stands for 3 or 4, and
c) Alkali metal sulphides, optionally together with alkali metal hydroxides the molar ratio of (a + b): c being in the range of from 0.85: 1 to 1.15 : 1, and
d) an organic solvent, optionally together with catalysts and/or co-solvent.
characterized in that the molar ratio of alkali metal sulphides c) and organic solvents d) is in the range of from 1 : 2 to 1: 15 and the alkali metal sulphide is rendered anhydrous in N-methylcaprolactam before the addition of aromatic halogenated compounds of the Formulae I, II or III and the reaction is carried out at 0.1 - 2.5 bar.

2. Process according to Claim 1 characterized in that the reaction is carried out at temperatures of from 170° C to 270° C.

3. Process according to Claim 1, characterized in that N,N-dialkyl-carboxylic acid amides are used as co-solvent.

4. Process according to Claim 1, characterized in that the alkali metal sulphide is rendered anhydrous with the additional use of an inert entrainer.

5. Process according to Claim 5, characterized in that toluene is used as inert entrainer.

6. Process according to at least one of the preceding Claims, characterized in that the alkali metal sulphide used is sodium sulphide.

## Revendications

1. Procédé de production de polyarylènesulfures de haut poids moléculaire, éventuellement ramifiés à partir

a) de 0 à 100 moles % d'hydrocarbures aromatiques dihalogénés de formule

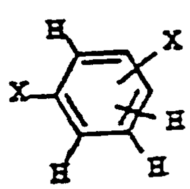

(I)

et de 0 à 100 moles % d'hydrocarbures aromatiques dihalogénés de formule

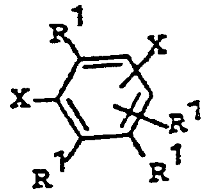

(II),

dans lesquelles

X désigne des halogènes en position méta ou para l'un par rapport à l'autre et

$R^1$ a des valeurs identiques ou différentes et peut représenter l'hydrogène, un groupe alkyle, cycloalkyle, aryle, alkylaryle, arylalkyle, deux restes $R^1$ en ortho l'un par rapport à l'autre pouvant être réunis en un noyau aromatique ou hétérocyclique et il y a toujours un reste $R^1$ différent d'un atome d'hydrogène et

b) de 0 à 5 moles %, par rapport à la somme du composant a) et b), d'un hydrocarbure aromatique trihalogéné ou tétrahalogéné de formule

$$ArX_n, \quad (III)$$

dans laquelle:

Ar est un reste aromatique ou hétérocyclique

X est le chlore ou le brome et

n a la valeur 3 ou 4 et

c) de sulfures alcalins, le cas échéant conjointement avec des hydroxydes alcalins, le rapport molaire (a + b): c étant situé dans l'intervalle de 0,85: 1 à 1,15: 1 et

d) d'un solvant organique, en utilisant simultanément le cas échéant des catalyseurs et/ou des co-solvants, caractérisé en ce que le rapport molaire des sulfures alcalins c) et du solvant organique d) se situe dans l'intervalle de 1 : 2 à 1 : 15 et le sulfure alcalin est rendu anhydre avant l'addition des hydrocarbures aromatiques halogénés de formules I, II ou III dans du N-méthylcaprolactame et la réaction est conduite à 0,1 - 2,5 bars.

2. Procédé suivant la revendication 1, caractérisé en ce que la réaction est conduite à des températures de 170 à 270° C.

3 Procédé suivant la revendication 1, caractérisé en ce qu'on utilise des N,N-dialkylcarboxamides comme co-solvants.

4. Procédé suivant la revendication 1, caractérisé en ce que le sulfure alcalin est rendu anhydre en utilisant en outre un agent inerte d'entraînement.

5. Procédé suivant la revendication 5, caractérisé en ce qu'on utilise du toluène comme agent inerte d'entraînement.

6. Procédé suivant au moins l'une des revendications précédentes, caractérisé en ce qu'on utilise du sulfure de sodium comme sulfure alcalin.